# EUROPÄISCHE PATENTANMELDUNG

(11) **EP 4 667 760 A1**
(43) Veröffentlichungstag der Anmeldung: **24.12.2025**
(21) Anmeldenummer: 24182997.7
(22) Anmeldetag: 19.06.2024
(51) Int. Cl.: F16C 17/00, C23C 4/08, C23C 24/04, F16C 33/12, F16C 33/14

(54) **VERFAHREN ZUM HERSTELLEN EINES LAGERBAUTEILS, LAGERBAUTEIL UND PLANETENTRÄGERACHSE**

(71) Anmelder: Flender GmbH, 46395 Bocholt (DE)
(72) Erfinder: DINTER, Ralf, 46395 Bocholt (DE)
(74) Vertreter: Michalski Hüttermann & Partner Patentanwälte mbB

(57) **Zusammenfassung**

Die Erfindung betrifft ein Verfahren zum Herstellen eines Lagerbauteils 44, bei dem ein Grundkörper 50 mit einer zumindest teilweise aufgerauten Oberfläche 52, 54 bereitgestellt wird und mittels eines Cold-Spray-Verfahrens eine zumindest partielle und mehrlagige Metallbeschichtung 34 aufgebracht wird. Eine erste Schicht 40 besteht zumindest nahezu vollständig aus einer Nickelbronze oder einer Aluminiumbronze und zumindest einer weiteren Schicht 42ₙ wird ein Festschmierstoff zu dem Gleitlagermaterial zugegeben.

## Beschreibung

Die Erfindung betrifft ein Verfahren zum Herstellen eines Lagerbauteils, bei dem ein Grundkörper mit einer zumindest teilweise aufgerauten Oberfläche bereitgestellt wird und mittels eines Cold-Spray-Verfahrens eine zumindest partielle und mehrlagige Metallbeschichtung aufgebracht wird.

Aus der EP 3 933 067 A1 ist bekannt, auf ein Zahnrad bzw. dessen Zahnflanken eine Randschicht mittels eines Cold-Spray-Verfahrens aufzutragen. Cold Spray - zu deutsch: Kaltgasspritzen - ist ein Verfahren im Bereich des thermischen Spritzens. Dieses Verfahren ist vorteilhaft, da der verwendete Spritzwerkstoff weder an- noch aufgeschmolzen wird und dadurch ein thermischer Einfluss auf Schicht und Trägermaterial gering ist.

Beim Cold-Spray wird vorteilhaft ein Prozessgas, z. B. Stickstoff oder Helium, bei hohem Druck, vorzugsweise 30 bar bis 50 bar, einer Spritzpistole zugeführt und in dieser auf eine Temperatur von vorzugsweise zwischen 800°C und 1100°C erwärmt. Eine anschließende Expansion des erhitzten und komprimierten Gases in einer konvergent-divergenten Düse auf Umgebungsdruck hat zur Folge, dass das Prozessgas auf Überschallgeschwindigkeit beschleunigt und auf Temperaturen von ca. unter 100°C abkühlt. Granulares Material, insbesondere Pulver, wird mittels einer Fördereinheit und einem, vorzugsweise gleichartigen, Trägergas im konvergenten Bereich der Düse injiziert und im Hauptgasstrom auf Partikelgeschwindigkeiten von vorteilhaft 900 m/s bis 1200 m/s beschleunigt. Die Pulverpartikel treffen in einem stark fokussierten Spritzstrahl auf eine unbehandelte oder vorbehandelte Bauteiloberfläche. Es erfolgt eine Verformung der Bauteiloberfläche sowie eine Verformung der Pulverpartikel selbst, wodurch eine fest haftende, dichte und oxidarme Schicht gebildet wird. Die hohe kinetische Energie der Pulverpartikel und der damit verbundene, hohe Verformungsgrad beim Aufprall auf dem Bauteil, ermöglichen die Herstellung von homogenen und sehr dichten Schichten, bei einer variablen Schichtdicke von 1 mm bis hin zu mehreren cm.

Für Gleitlager in Planetengetrieben für Windkraftanlagen liegt die Lebensdaueranforderung mittlerweile im Bereich von 30 Jahren und die Anzahl der Betriebszustände mit Mischreibung steigt. Die Gleitlager sollen über die geforderte Lebensdauer wartungsfrei arbeiten. Herkömmlich kommen Gleitlager aus Bronze beispielsweise mit der Legierung CuSn12Ni zum Einsatz. Sie werden im Schleudergussverfahren hergestellt, was zu kleinen Korngrößen führt, die im Vergleich zur Stranggusstechnik geringere Verschleißraten aufweisen. Diese Gleitlager werden mit einer Buchse eingebaut. Eine weitere Form der Gleitlager wird aus dem gleichen Material hergestellt, allerdings mit Laser Metal Deposition - LMD - direkt auf die Planetenachse geschweißt. Dadurch wird die benötigte Menge der teuren Bronze reduziert und eine direkte Verbindung mit der Planetenachse ohne jegliche Relativbewegung gewährleistet. Es besteht ein ständiges Bedürfnis Gleitlagerungen in Windkraftgetrieben zu verbessern. Hierfür bietet es sich an, Cold-Spray für die Herstellung der Gleitlagerung einzusetzen.

Es ist die Aufgabe der Erfindung ein Verfahren aufzuzeigen, mit dem mittels Cold-Spray Lagerbauteile hergestellt werden können.

Die Lösung der Aufgabe erfolgt durch ein Verfahren mit den Merkmalen des Anspruchs 1. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Eine Ausführungsform betrifft ein Verfahren zum Herstellen eines Lagerbauteils, bei dem ein Grundkörper mit einer zumindest teilweise aufgerauten Oberfläche bereitgestellt wird und mittels eines Cold-Spray-Verfahrens eine zumindest partielle und mehrlagige Metallbeschichtung aufgebracht wird, bei der eine erste Schicht zumindest nahezu vollständig aus einer Nickelbronze oder einer Aluminiumbronze besteht und zumindest einer weiteren Schicht ein Festschmierstoff zu dem Gleitlagermaterial zugegeben wird. Bei der Nickelbronze oder der Aluminiumbronze handelt es definitionsgemäß um ein Gleitlagermaterial.

Dem vorgeschlagenen Verfahren liegt die Idee zugrunde, den Festschmierstoff mittels Cold-Spray in das Gleitlagermaterial einzubringen. Der Grundkörper ist beispielsweise eine aus Stahl gefertigte Planetenachse eines Windkraftgetriebes. Die Oberfläche des Grundmaterials wird zumindest teilweise durch eine spezielle Behandlung vorbereitet, um eine gute Verbindung des Gleitlagermaterials mit dem Material des Grundkörpers zu gewährleisten. Die erste Schicht besteht vorzugweise zu 100 % aus dem Gleitlagermaterial. Auch hierdurch wird die Verbindung des Gleitlagermaterials mit dem Material des Grundkörpers verbessert. In den folgenden Schichten wird der Anteil des Festschmierstoffs an dem Gleitlagermaterial erhöht. Hierdurch werden die Selbstschmiereigenschaften des Lagerbauteils erhöht.

Die Prozesstemperaturen sind im Vergleich zum Gießen oder Schweißen wesentlich niedriger, so dass der Festschmierstoff nicht zerstört wird. Der Vorteil von Cold-Spray besteht darin, dass kleine Korngrößen erreicht werden können, wodurch geringe Verschleißraten gewährleistet werden. Cold-Spray ist somit vergleichbar zu Schleuderguss, wobei allerdings über Cold-Spray noch kleinere Korngrößen erreicht werden können. Heute typische Festschmierstoffe, z.B. Graphite oder MoS2 - werden bei LMD aufgrund der hohen Temperaturen zerstört. Hexagonales Bornitrid - hBN - oder Nickel Graphite Abradable Powders - Nickelkugeln mit enthaltenem Graphite - können durchaus bei höheren Temperaturen stabil in einem Prozess eingesetzt werden. Cold-Spray reduziert also die Gefahr die Festschmierstoffe zu zerstören bzw. erweitert den Anwendungsbereich verschiedener Festschmierstoffe.

In einer bevorzugten Ausgestaltung des Verfahrens ist vorgesehen, dass zumindest zwei weitere Schichten aufgebracht werden, wobei der Anteil des Festschmierstoffs an dem Gleitlagermaterial mit jeder aufgebrachten Schicht zunimmt. Hierdurch wird dem Erfordernis Rechnung getragen, dass in Richtung des Grundmaterials des Lagerbauteils eine gute Anhaftung gegeben ist und in Richtung der Bauteiloberfläche die Selbstschmierfähigkeit ansteigt, um auf der Oberfläche einen gewünschten Reibwert zu erreichen. Gute Selbstschmierfähigkeit kann sich aber auch in verbesserten Notlaufeigenschaften äußern, indem durch den Festschmierstoff die Fressneigung reduziert wird, was sonst, wenn eine Fressen auftritt, zur völligen Zerstörung des Lagers führen kann.

In einer zudem bevorzugten Ausgestaltung des Verfahrens nimmt der Anteil des Festschmierstoffs an dem Gleitlagermaterial über die zumindest zwei aufgebrachten Schichten zur Bauteiloberfläche hin gradiert zu. Hierbei ist der Begriff "gradiert" in einem Sinne von gleichmäßig, stetig zu verstehen.

In vorteilhaften konkreten Ausgestaltungen kann vorgesehen sein, dass das Gleitlagermaterial als CuSn8Ni, CuSn6Ni8, CuAl10Fe5Ni, AlSn20Cu, AlSn6Si4Cu, AlSn6 oder CuAl9Fe1 ausgeführt ist.

In einer weiterhin bevorzugten Ausgestaltung des Verfahrens wird die Oberfläche des Werkstücks über einen Bearbeitungsschritt des Einprägens, insbesondere Rändeln, des Partikelstrahlens, insbesondere Sandstrahlen, oder des Lasertextuierens aufgeraut. Von Vorteil ist, wenn über den aufrauenden Bearbeitungsschritt eine Rauigkeit mit einem Mittenrauwert Ra > 5µm erzeugt wird.

Zudem umfasst eine bevorzugte Ausgestaltung des Verfahrens als Festschmierstoff beispielsweise zumindest einen der folgenden Stoffe: Graphit, Molybdändisulfid, Bariumnitrit, hexagonales Bornitrit.

Die Aufgabe wird zudem gelöst durch ein Lagerbauteil mit einer mehrlagigen Metallbeschichtung, wobei das Lagerbauteil wie beschrieben hergestellt ist.

Schließlich wird die Aufgabe gelöst durch eine Planetenträgerachse bestehend aus einem Grundkörper aus Stahl, wobei der Grundkörper gemäß dem Verfahren wie beschrieben beschichtet ist.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine beispielhafte und als Spritzpistole ausgeführte Vorrichtung zur Durchführung eines Cold-Spray-Verfahrens und
Fig. 2: eine schematische Darstellung eines Lagerbauteils mit einer durch Cold-spray hergestellten Metallbeschichtung.

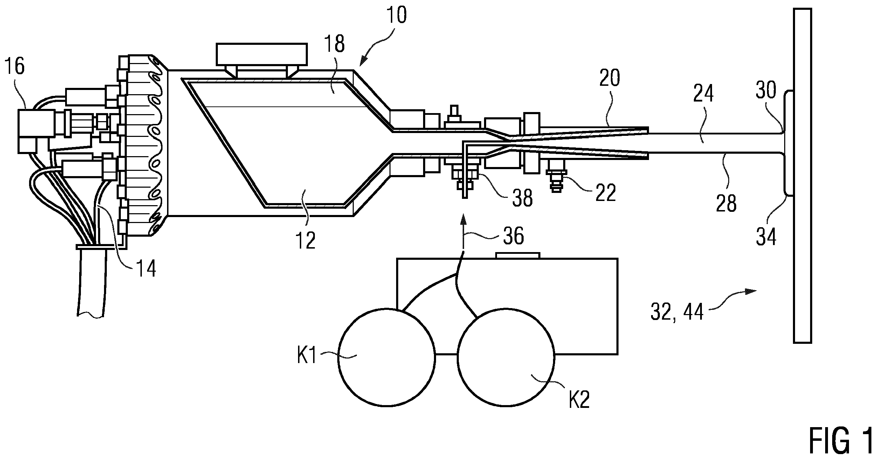

Die Figur 1 zeigt eine beispielhafte und als Spritzpistole ausgeführte Vorrichtung 10 zur Durchführung des erfindungsgemäßen Verfahrens. Gezeigt ist eine beheizte Hochdruckkammer 12 sowie ein Heizelement 14. Ein Prozessgas 18, vorzugsweise Stickstoff oder Helium, wird in der Vorrichtung 10 bei hohem Druck zugeführt und auf eine Temperatur zwischen 800°C und 1100°C aufgeheizt. Die Vorrichtung 10 weist hierzu eine Druckmessung 16, das Heizelement 14 und die beheizte Hochdruckkammer 12 auf. Ferner ist eine Düse 20 vorgesehen, in welcher das erhitzte und hochgespannte Prozessgas 18 vorteilhaft auf Umgebungsdruck expandiert. Das Prozessgas 18 wird durch die Expansion auf Überschallgeschwindigkeit beschleunigt und auf Temperaturen von weniger als 100°C abgekühlt. Dies gelingt u.a. mit einer Düsenkühlung 22. Mittels einer Fördereinheit 36 und einem Trägergas 38, wobei das Trägergas 38 vorzugsweise gleichartig zum Prozessgas 18 ist, werden Partikel 24, insbesondere Pulver, injiziert. Dies gelingt vorteilhaft im konvergenten Bereich der Düse 20.

Im Hauptgasstrom werden die Partikel 24 auf Geschwindigkeiten von vorzugsweise 900m/s bis 1200m/s beschleunigt. Zudem ist eine Mischeinheit 26 gezeigt, in welcher eine gewünschte Pulvermischung aus zumindest zwei Pulvern P1 und P2 erhalten wird. Das erste Pulver P1 lagert beispielsweise in einer Kammer K1. Das zweite Pulver P2 lagert beispielsweise in einer Kammer K2. Bei dem in der Kammer K1 gelagerten Pulver handelt es sich beispielsweise um eine Nickelbronze oder eine Aluminiumbronze. Bei dem in der Kammer K2 gelagerten Pulver handelt es sich beispielsweise um einen Festschmierstoff. Es ist auch eine beliebige Anzahl von Pulvern und somit auch mehr als die beschriebenen zwei Kammern möglich.

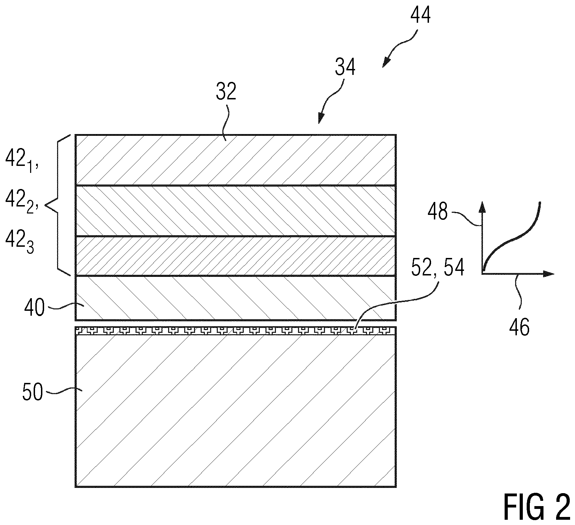

Ein Spritzstrahl 28 führt, wie in der Figur 1 gezeigt, zu einem Partikeleinschlag 30 auf einer Oberfläche 32 eines Bauteils 44, welche in der Figur 1 als ebene Oberfläche 32 gezeigt ist, allerdings auch gekrümmt ausgeführt sein kann. Auf diese Weise wird eine Metallbeschichtung 34 gebildet. Die Metallbeschichtung 34 weist nach Fertigstellung eine erste Schicht 40 und zumindest eine zweite Schicht 42 auf, wie dies in Figur 2 schematisch dargestellt ist.

Die Figur 2 zeigt schematisch ein Bauteil 44, das beispielsweise als Planetenachse eines Planetengetriebes für eine Windkraftanlage ausgeführt sein kann. Es ist eine Metallbeschichtung 34 gezeigt, die unter Einsatz einer zu Figur 1 beschriebenen Vorrichtung 10 unter Anwendung eines Cold-Spray-Verfahrens auf die Oberfläche 52 eines Grundkörpers 50 aufgetragen wurde. Die Metallbeschichtung 34 umfasst vorliegt eine erste Schicht 40, die zumindest nahezu vollständig aus einer Nickelbronze oder einer Aluminiumbronze besteht, und drei weitere Schichten 40₁, 40₂, 40₃, die zusätzlich einen dem Gleitlagermaterial hinzugegebenen Festschmierstoff enthalten. Die drei weiteren Schichten 40₁, 40₂, 40s zeichnen sich dadurch aus, dass der Anteil des Festschmierstoffs an dem Gleitlagermaterial mit jeder aufgebrachten Schicht 40₁, 40₂, 40s, d.h. in Richtung der Oberfläche 32 des Bauteils 44, zunimmt. Bei den drei Schichten 40₁, 40₂, 40s handelt es sich um ein mögliches Ausführungsbeispiel; es kann auch eine andere Anzahl von mit einem Festschmierstoff versehene Schichten 40 vorgesehen sein.

Insbesondere ist vorliegend vorgesehen, dass der Anteil des Festschmierstoffs an dem Gleitlagermaterial über die drei aufgebrachten Schichten 40₁, 40₂, 40s zur Bauteiloberfläche 32 hin gradiert zunimmt. Dies ist in der Figur 2 dargestellt durch ein Schaubild mit den Bezugszeichen 46 und 48. Mit 46 ist die Menge an Festschmierstoff bezeichnet, die einer bestimmten Menge an Gleitlagermaterial hinzugegeben wird. Mit 48 ist die Position bezogen auf das Bauteil 44 bezeichnet, wobei dies bei einem runden Lagerbauteil zweckmäßigerweise eine radiale Position bezogen auf eine Drehachse ist. Während das Gleitlagermaterial beispielsweise als das Gleitlagermaterial als CuSn8Ni, CuSn6Ni8, CuAl10Fe5Ni, AlSn20Cu, AlSn6Si4Cu, AlSn6 oder CuAl9Fe1 ausgeführt ist, kann der Festschmierstoff Graphit, Molybdändisulfid, Bariumnitrit, hexagonales Bornitrit umfassen.

Die Oberfläche des Grundkörpers 50 ist vorliegend zumindest teilweise mit einer aufgerauten Oberfläche 52 versehen, wobei das Aufrauen beispielsweise über Rändeln, Partikelstrahlen oder Lasertexturieren erfolgt ist. Die aufgeraute Oberfläche ist mit dem Bezugszeichen 54 versehen.

### Bezugszeichenliste

- 10: Vorrichtung
- 12: Hochdruckkammer
- 14: Heizelement
- 16: Druckmessung
- 18: Prozessgas
- 20: Düse
- 22: Düsenkühlung
- 24: Partikel
- 26: Mischeinheit
- 28: Spritzstrahl
- 30: Partikeleinschlag
- 32: Oberfläche
- 34: Metallbeschichtung
- 36: Fördereinheit
- 38: Trägergas
- 40: Schicht
- 42: Schicht
- 44: Bauteil
- 46: Menge Festschmierstoff
- 48: Position bezogen auf Bauteil
- 50: Grundkörper
- 52: Oberfläche
- 54: aufgeraute Oberfläche

## Patentansprüche

1. Verfahren zum Herstellen eines Lagerbauteils (44), bei dem
ein Grundkörper (50) mit einer zumindest teilweise aufgerauten Oberfläche (52, 54) bereitgestellt wird und
mittels eines Cold-Spray-Verfahrens eine zumindest partielle und mehrlagige Metallbeschichtung (34) aufgebracht wird,
bei der eine erste Schicht (40) zumindest nahezu vollständig aus einem durch eine Nickelbronze oder eine Aluminiumbronze gebildeten Gleitlagermaterial besteht und zumindest einer weiteren Schicht (42ₙ) ein Festschmierstoff zu dem Gleitlagermaterial zugegeben wird.

2. Verfahren nach Anspruch 1, **dadurch gekennzeichnet, dass** zumindest zwei weitere Schichten (42₁, 42₂) aufgebracht werden, wobei der Anteil des Festschmierstoffs an dem Gleitlagermaterial mit jeder aufgebrachten Schicht (42ₙ) zunimmt.

3. Verfahren nach Anspruch 2, **dadurch gekennzeichnet, dass** der Anteil des Festschmierstoffs an dem Gleitlagermaterial über die zumindest zwei aufgebrachten Schichten zur Bauteiloberfläche (32) hin gradiert zunimmt.

4. Verfahren nach einem der Ansprüche 1 bis 3, **dadurch gekennzeichnet, dass** das Gleitlagermaterial als CuSn8Ni, CuSn6Ni8, CuAl10Fe5Ni, AlSn20Cu, AlSn6Si4Cu, AlSn6 oder CuAl9Fe1 ausgeführt ist.

5. Verfahren nach einem der Ansprüche 1 bis 4, **dadurch gekennzeichnet, dass** die Oberfläche (52, 54) des Grundkörpers (50) über einen Bearbeitungsschritt des Einprägens, insbesondere Rändeln, des Partikelstrahlens, insbesondere Sandstrahlen, oder des Lasertextuierens aufgeraut wird.

6. Verfahren nach Anspruch 5, **dadurch gekennzeichnet, dass** über den aufrauenden Bearbeitungsschritt eine Rauigkeit mit einem Mittenrauwert Ra > 5µm erzeugt wird.

7. Verfahren nach einem der Ansprüche 1 bis 6, **dadurch gekennzeichnet, dass** der Festschmierstoff beispielsweise zumindest einen der folgenden Stoffe umfasst: Graphit, Molybdändisulfid, Bariumnitrit, hexagonales Bornitrit.

8. Lagerbauteil (44) mit einer mehrlagigen Metallbeschichtung (34), wobei das Lagerbauteil (44) nach einem der vorangegangenen Ansprüche hergestellt ist.

9. Planetenträgerachse bestehend aus einem Grundkörper (50) aus Stahl, wobei der Grundkörper (50) gemäß dem Verfahren nach einem der Ansprüche 1 bis 7 beschichtet ist.
